# EUROPEAN PATENT APPLICATION

(11) **EP 1 406 443 A2**
(43) Date of publication of application: **07.04.2004**
(21) Application number: 03255914.8
(22) Date of filing: 22.09.2003
(51) Int. Cl.: H04N 7/088, H04N 5/445

(54) **Twin tuner television receiving apparatus with teleweb capability**

(30) Priority: 30.09.2002 KR 2002059355
(71) Applicant: SAMSUNG ELECTRONICS CO., LTD., Suwon-City, Kyungki-do (KR)
(72) Inventor: Noh, Young-joong, Daegu-city (KR)
(74) Representative: Geary, Stuart Lloyd

(57) **Abstract**

A teleweb receiving apparatus and a controlling method thereof. In a teleweb receiving apparatus selectively displaying a broadcasting signal and a teleweb signal received by a main-tuner and a sub-tuner on a screen of a display unit, the main-tuner for tuning a channel in which the broadcasting signal exists, the sub-tuner for selectively tuning a channel including the teleweb signal, the teleweb receiving apparatus comprises an input unit for inputting a mode switching command to a broadcasting mode to a teleweb mode therethrough, a storage unit for storing teleweb information received through the sub-tuner, and a control unit for controlling to display the broadcasting signal tuned by the main-tuner on the display unit and download the teleweb information tuned by the sub-tuner to the storage unit when the teleweb receiving apparatus receives the mode switching command to the broadcasting mode through the input unit while displaying the teleweb information tuned by the sub-tuner in the teleweb mode. Accordingly, since it is possible to continuously download the teleweb information through the sub-tuner when the teleweb receiving apparatus is switched from the teleweb mode to the broadcasting mode, switching to the teleweb mode becomes fast and updating of the teleweb information becomes possible.

## Description

The present invention relates to a television receiving apparatus having a teleweb capability, the apparatus including a primary tuner and a teleweb decoder.

Teleweb is an enhanced teletext-based information service that provides a World Wide Web-like experience to users. As in the case of conventional teletext, the teleweb signals can be carried in the vertical blanking interval (VBI) of a television signal and in digital television signals such as DVB signals. The enhancements provided by teleweb include full colour, high resolution graphics.

Also, teleweb provides navigation by hyper-links and a menu system to give the user the World Wide Web-like experience.

Analogue teleweb transmission is based on the teletext packet 31 independent data service. In DVB systems, the teleweb data is multiplexed into the MPEG-2 data stream..

Televisions that can display teleweb data from received signals are well-known. When using such a television, there is often a considerable delay between switching to teleweb mode and the teleweb information being displayed because the actual data rate is low, particularly in the case of analogue television.

Also, the reception of teleweb data is interrupted by the user switching the television out of teleweb mode or changing channels. Consequently, when the user returns to the previously viewed teleweb information, the user must wait for the current teleweb data to be downloaded anew.

A television receiving apparatus according to the present invention is characterised by a secondary, independently tunable tuner and the teleweb decoder being configured to decode teleweb data received by the secondary tuner.

Preferably, the apparatus includes television signal processing means for processing sound and picture signals of a television signal received by the primary tuner and memory means, wherein the teleweb decoder is configured for decoding teleweb data and storing decoded teleweb data in the memory means while the television signal processing means is processing sound and picture signals of a television signal received by the primary tuner.

Further preferred and optional features are set forth in claims 3 to 6 appended hereto.

An embodiment of the present invention will now be described, by way of example, with reference to the accompanying drawings, in which:
Figure 1 is a block diagram showing a teleweb receiving apparatus according to the present invention;
Figure 2 is a flowchart showing a process of switching a teleweb receiving apparatus from a programme display mode to a teleweb mode by operation of a mode selection key provided on a remote controller;
Figures 3A to 3D are views showing screens displayed under the control of a control unit upon receipt of a command to switch teleweb mode;
Figure 4 is a flowchart showing the process of switching the teleweb receiving apparatus of Figure 1 from teleweb mode to programme display mode by operation of a mode selection key provided on the remote controller; and

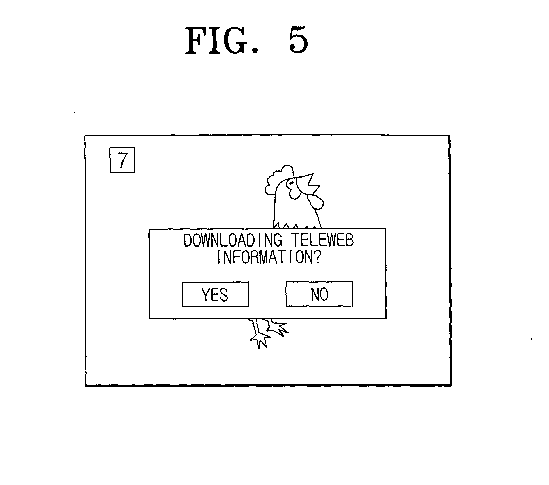

Figure 5 shows a screen displayed under the control of the control unit upon receipt of a command to switch to programme display mode.

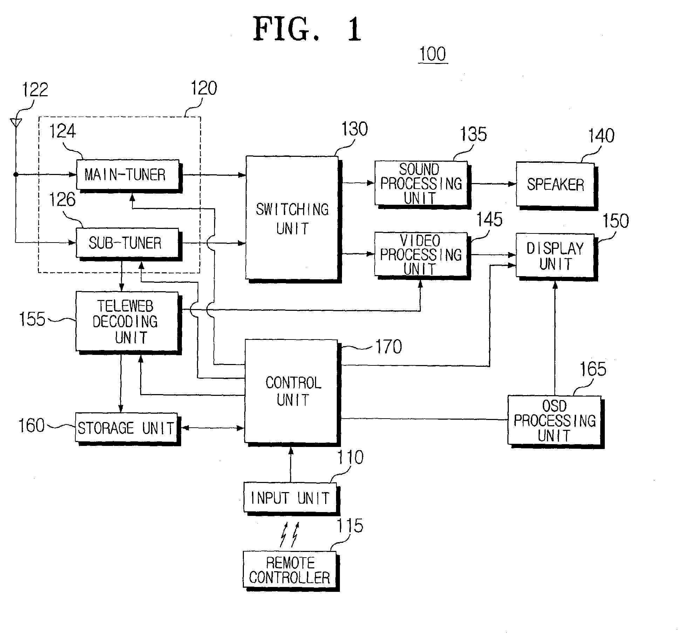

Referring to Figure 1, a teleweb receiving apparatus 100 has an input unit 110, a tuner unit 120, a switching unit 130, a sound processing unit 135, a speaker 140, a video processing unit 145, a display unit 150, a teleweb decoding unit 155, a storage unit 160, an on screen display (OSD) processing unit 165 and a control unit 170.

The input unit 110 is disposed in the body of the teleweb receiving apparatus 100 and has a plurality of keys for inputting control commands to the teleweb receiving apparatus 100. A remote controller 115, having a plurality of keys, enables a user to input control commands remotely.

The input unit 110 and/or the remote controller 115 are provided with a mode selection key (not shown) for inputting a mode switching command to switch the teleweb receiving apparatus between a programme display mode and teleweb mode.

The tuner unit 120 has a main tuner 124 and a secondary tuner 126.

The main tuner 124 tunes to a user selected channel from among the broadcasting signals received through an antenna 122.

The secondary tuner 126 tunes to a channel including teleweb information under the control of the control unit 170 when the teleweb receiving apparatus 100 is switched to teleweb mode. That is, the secondary tuner 126 is only used to receive teleweb data and operates independently of the main tuner 124.

The switching unit 130 separates the picture and sound signals from composite signals output by the main and the secondary tuners 124, 126 under the control of the control unit 170.

The sound processing unit 135 processes the sound signal, output by the switching unit 130, and outputs the processed sound signal, which is amplified, to the speaker 140.

The speaker 140 outputs the sound signal from the sound processing unit 135 so that it can be heard.

The video processing unit 145 separates the horizontal and vertical synchronization signals and the luminance and colour difference signals from the picture signal, output by the switching unit 130, and outputs red (R), green (G) and blue (B) signals derived from the brightness signal Y and the colour difference signal.

The display unit 150 displays an image determined by the brightness signal Y and R, G and B signals from the video-processing unit 145. The display unit 150 may comprise a liquid crystal display (LCD) for displaying programme pictures and teleweb information.

The teleweb decoding unit 155 extracts the teleweb data from a received television signal, decodes the extracted teleweb data and outputs the decoded teleweb data to the video processing unit 145.

The storage unit 160 stores a control program for controlling the operation of the teleweb receiving apparatus 100. The storing unit 160 also stores the decoded teleweb data from the teleweb decoding unit 155.

When the teleweb receiving apparatus 100 is switched to teleweb mode in response to operation of the mode selection key, provided on the input unit 110 or the remote controller 115, the OSD processing unit 165 produces an OSD menu signal which it outputs to the display unit 150. The OSD menu enables a user to start the capture teleweb data from the channel tuned to by the secondary tuner 126 under the control of the control unit 170.

The OSD processing unit 165 also produces a teleweb information channel list signal and a teleweb data capture, in other words "downloading", state signal under the control of the control unit 170, and outputs these to the display unit 150.

The control unit 170 controls the operation of the teleweb receiving apparatus 100 according to the control program stored in the storage unit 160. The control unit 170 controls the tuner unit 120, the switching unit 130, the sound processing unit 135, the image processing unit 145, the display unit 150, the teleweb decoding unit 155, the storage unit 160 and the OSD processing unit 165 according to command signals input via the input unit 110.

The control unit 170 controls the sound processing unit 135 and the video processing unit 145 to output corresponding sound and picture signals through the speaker 140 and the display unit 150 when the teleweb receiving apparatus 100 is switched to programme display mode in response to operation of the mode selection key, provided on the input unit 110 or the remote controller 115.

When the teleweb receiving apparatus 100 is switched to teleweb mode in response to operation of the mode selection key, provided on the remote controller 115, while a programme is being watched, the display unit 150 keeps displaying the programme picture on the screen of the display unit 150 and simultaneously causes the teleweb data in the channel tuned to by the secondary tuner 126 to be captured and sent to the storage unit 160.

When the teleweb receiving apparatus is switched to teleweb mode, the teleweb information is not immediately displayed because the slow data rate of teleweb data in the vertical blanking intervals (VBI) of the received television signal means that there is a significant delay before all of the necessary teleweb data has been received.

When all of the required teleweb data has been captured and stored in the storage unit 160, the control unit 170 displays the teleweb information, corresponding to the captured teleweb data in the storage unit 160 on the screen of the display unit 150. If the teleweb receiving apparatus is now switched to programme display mode by operation of the mode selection key, provided on the remote controller 115, the control unit 170 causes the display unit 150 to display the programme being received by the main tuner 124.

Simultaneously, the control unit 170 outputs an OSD menu that allows the user to select, using the input unit 110 or the remote controller 115, whether to capture the teleweb information in the signal tuned to by the secondary tuner 126.

A method of controlling the teleweb receiving apparatus according to the present invention will be now described.

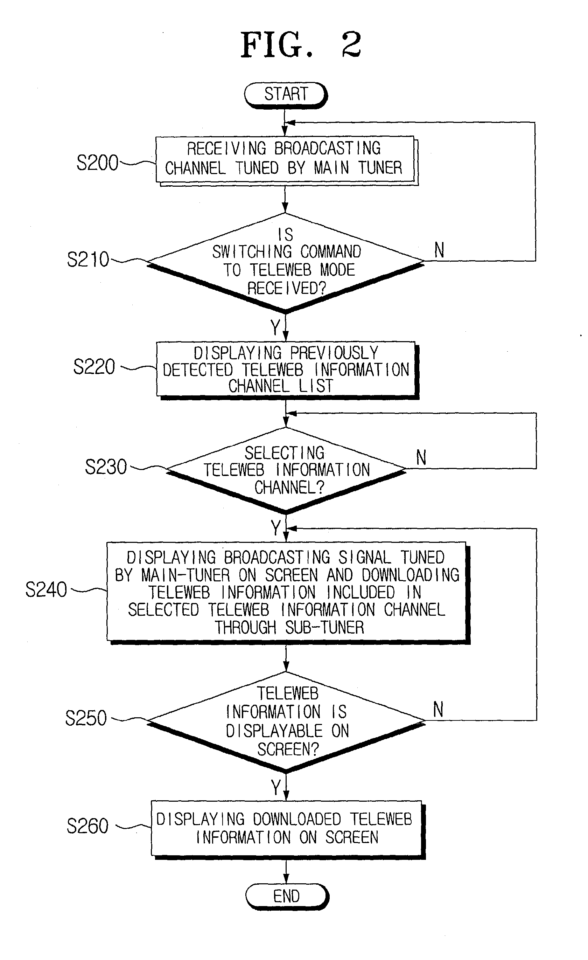

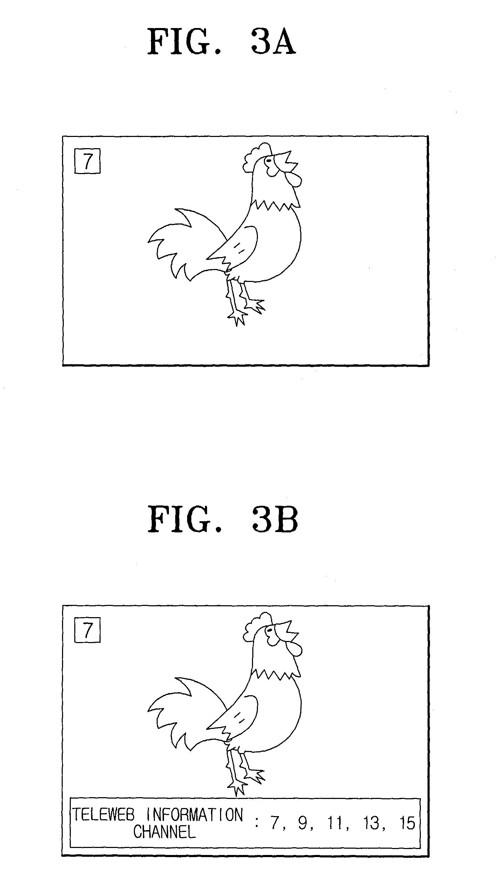

Referring to Figure 2, when a user selects channel "7" using the input unit 110 or the remote controller 115 (see Figure 3A), the control unit 170 controls the teleweb receiving apparatus so that channel "7" is tuned to by the main tuner 124, and the picture of the current programme on channel "7" is displayed by the display unit 150 and the programme's sound track is emitted by the speaker 140 (S200). While displaying the picture of the channel '7', the control unit 170 determines whether a command to switch to teleweb mode is being received from the remote controller 115 or the input unit 110 (S210).

If it is determined that a command to switch to teleweb mode is being received in S210, the control unit 170 operates so that a previously received and stored teleweb information channel list is displayed in a predetermined area of the screen of the display unit 150, as shown in Figure 3B, (S220). After displaying the teleweb information channel list, the control unit 170 determines whether a selection signal identifying one of the listed channels is being received from the input unit 110 or the remote controller 115 (S230).

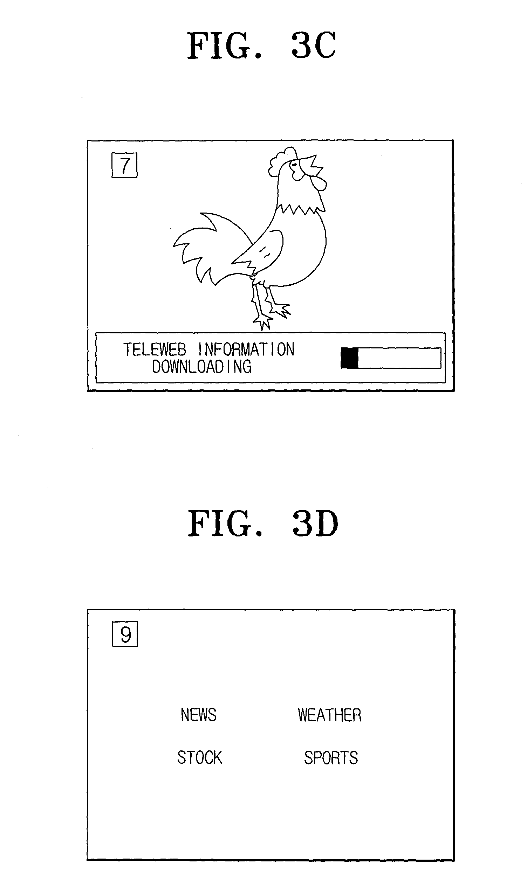

If it is determined that a channel selection signal is being received in S230, the control unit 170 operates so that the programme picture of channel '7', tuned to by the main tuner 124, continues to be displayed on the screen of the display unit 150 and simultaneously stores teleweb data from the signal in the channel tuned to by the secondary tuner 126 in the storage unit 160 (S240). At this point, the control unit 170 controls the OSD processing unit 165 to display the teleweb capture progress in a predetermined area of the screen of the display unit 150, as shown in Figure 3C.

The control unit 170 determines whether sufficient teleweb data has been stored in the storage unit 160 for the teleweb information to be displayable on the screen of the display unit 150 (S250). If it is determined that the teleweb information is displayable in S250, the control unit 170 displays the teleweb information stored in the storage unit 160 on the screen of the display unit 150 (S260). Accordingly, a user views the teleweb information included in a broadcasting signal of the channel '9' through the screen of the display unit 150 as shown in Figure 3D.

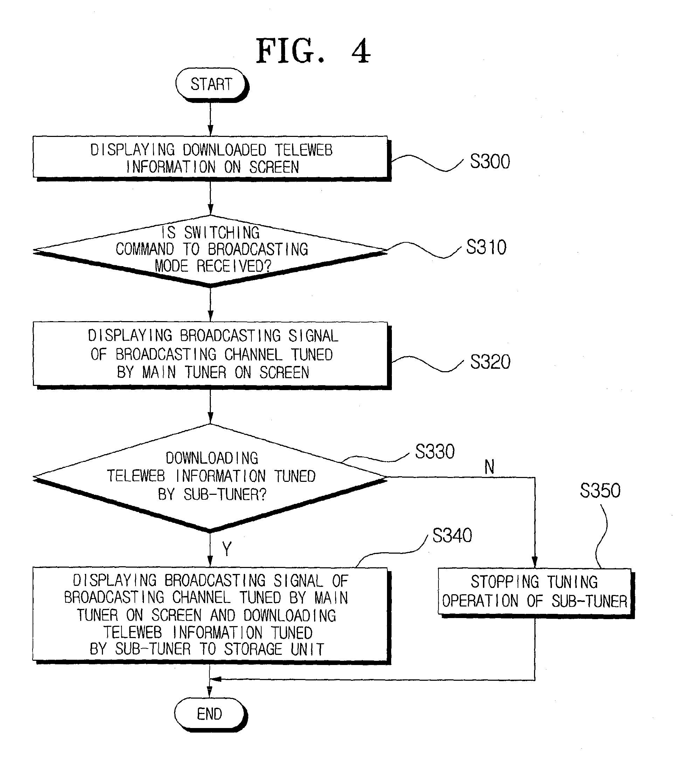

Referring to Figure 4, when the teleweb receiving apparatus 100 is switched to teleweb mode, it displays teleweb information from a selected channel (S300). At this point, if a command is input, using the mode selection key on the input unit 110 or the remote controller 115, to switch the teleweb receiving apparatus to programme display mode (S310), the control unit 170 causes the picture of the television signal tuned to by the main tuner 124 on the screen of the display unit 150 (S320). That is, the display returns to the picture of the television channel being watched before teleweb mode was selected.

The control unit 170 also outputs an OSD menu signal for enabling the user to select whether to continue to capture the teleweb data from the television signal tuned to by the secondary tuner 126 to the display unit 150 for display. If the user wants to keep capturing teleweb data, he/she selects 'YES' and if the user does not want to continue capturing teleweb data, he/she selects 'NO' (S330). The user selects continued capturing of teleweb data or termination of the capturing of teleweb data using a cursor key (not shown) provided on the remote controller 115.

If 'YES' is selected in S330, the control unit 170 displays the programme picture of the television channel tuned to by the main tuner 124 on the screen of the display unit 150 and continues writing teleweb data from the television channel tuned to by the secondary tuner 126 to the storage unit 126 (S340).

Otherwise, i.e. if 'NO' is selected in S330, the control unit 170 stops the capturing of teleweb data using the sub tuner 126 (S350).

The capturing of teleweb data can be set as a default so that teleweb data is automatically continues to be captured when the teleweb receiving apparatus 100 is switched from teleweb mode to the programme display mode.

In the teleweb receiving apparatus and the corresponding control method described above, it is possible to continue capturing teleweb data using the secondary tuner when the teleweb receiving apparatus is switched from teleweb mode to the programme display mode. Accordingly, switching to the teleweb mode becomes fast and updating of the teleweb information becomes possible.

## Claims

1. A television receiving apparatus having a teleweb capability, the apparatus including a primary tuner (124) and a teleweb decoder (155), **characterised by** a secondary, independently tunable tuner (126) and the teleweb decoder (155) being configured to decode teleweb data received by the secondary tuner (126).

2. An apparatus according to claim 1, including television signal processing means (135, 145) for processing sound and picture signals of a television signal received by the primary tuner (124) and memory means (160), wherein the teleweb decoder (155) is configured for decoding teleweb data and storing decoded teleweb data in the memory means (160) while the television signal processing means (135, 145) is processing sound and picture signals of a television signal received by the primary tuner (124).

3. In a teleweb receiving apparatus selectively displaying a broadcasting signal and a teleweb signal received by a main-tuner and a sub-tuner on a screen of a display unit, the main-tuner for tuning a channel in which the broadcasting signal exists, the sub-tuner for selectively tuning a channel including the teleweb signal, the teleweb receiving apparatus comprising;
an input unit for inputting a mode switching command to a broadcasting mode or a teleweb mode;
a storage unit for storing teleweb information received through the sub-tuner; and
a control unit for controlling to display the broadcasting signal tuned by the main-tuner on the display unit and download the teleweb information tuned by the sub-tuner to the storage unit when the teleweb receiving apparatus receives the mode switching command to the broadcasting mode through the input unit while displaying the teleweb information tuned by the sub-tuner in the teleweb mode.

4. The teleweb receiving apparatus of claim 3, further comprising:
an on screen display (OSD) processing unit outputting an OSD menu for allowing a user to select whether or not to download the teleweb information tuned by the sub-tuner when the mode switching command to the broadcasting mode is received.

5. A method of controlling a teleweb receiving apparatus selectively displaying a broadcasting signal and a teleweb signal received by a main-tuner and a sub-tuner on a screen of a display unit, the main-tuner for tuning a channel in which the broadcasting signal exists, the sub-tuner for selectively tuning a channel including a teleweb signal, the method comprising the steps of:
displaying teleweb information tuned by the sub-tuner on the screen of the display unit when a switching command to a teleweb mode is received; and
controlling to display the broadcasting signal tuned by the main-tuner on the screen of the display unit and download the teleweb information tuned by the sub-tuner to a storage medium when the teleweb receiving apparatus receives the switching command to the broadcasting mode to display the broadcasting signal while displaying the teleweb information on the screen of the display unit.

6. The method of controlling the teleweb receiving apparatus of claim 5, further comprising the step of outputting an OSD menu for allowing a user to select whether or not to download the teleweb information tuned by the sub-tuner when the switching command to the broadcasting mode is received.
